# EUROPÄISCHE PATENTANMELDUNG

(11) **EP 3 982 520 A1**
(43) Veröffentlichungstag der Anmeldung: **13.04.2022**
(21) Anmeldenummer: 20213049.8
(22) Anmeldetag: 10.12.2020
(51) Int. Cl.: H02K 11/40, H02K 7/00, H02K 5/10, B60K 1/00, H01R 39/12, H01R 39/34, H05F 3/04, H02K 5/124

(54) **ANORDNUNG ZUR ABDICHTUNG UND ERDUNG EINER WELLE FÜR EIN GETRIEBE, FÜR EINE ELEKTRISCHE MASCHINE, ODER FÜR EINE ELEKTRISCHE ACHSANTRIEBS-EINHEIT**

(30) Priorität: 06.10.2020 DE 102020212588
(71) Anmelder: ZF Friedrichshafen AG, 88046 Friedrichshafen (DE)
(72) Erfinder: Griesbach, Michael, 88085 Langenargen (DE); Erny, Dominik, 77966 Kappel-Grafenhausen (DE)

(57) **Zusammenfassung**

Anordnung zur Abdichtung und Erdung einer aus einem Gehäuse (GH) hervorragenden Welle (W), wobei ein Radialwellendichtring (DR) mit einer Dichtlippe (DL) zur Abdichtung eines Spalts zwischen der Welle (W) und dem Gehäuse (GH) vorgesehen ist, wobei zur Herstellung einer elektrisch leitfähigen Verbindung zwischen der Welle (W) und dem Gehäuse (GH) eine Wellenerdungseinrichtung (E) vorgesehen ist, wobei die Wellenerdungseinrichtung (E) umgebungsseitig neben dem Radialwellendichtring (DR) angeordnet ist, wobei die Wellenerdungseinrichtung (E) zumindest ein Kontaktelement (EK) aufweist, welches einen Schleifkontakt (K1) zu einer auf der Welle (W) aufgebrachten dünnwandigen Blechhülse (H) mit einem radial nach außen gerichteten Abschnitt (HX) bilden, wobei ein Wirkdurchmesser der Dichtlippe (DL) kleiner ist als ein Durchmesser des Schleifkontakts (K1) des zumindest einen Kontaktelements (EK); sowie Getriebe (G) oder elektrische Achsantriebs-Einheit (EA) für ein Kraftfahrzeug mit einer solchen Anordnung; sowie elektrische Maschine (EM2) mit einer solchen Anordnung.

## Beschreibung

Die Erfindung betrifft eine Anordnung zur Abdichtung und Erdung einer aus einem Gehäuse hervorragenden Welle. Die Erfindung betrifft ferner ein Getriebe für ein Kraftfahrzeug mit einer solchen Anordnung, sowie eine elektrische Achsantriebs-Einheit für ein Kraftfahrzeug mit einer solchen Anordnung, sowie eine elektrische Maschine mit einer solchen Anordnung.

Die Veröffentlichung WO 2016/205803 A1 beschreibt eine explosions-feste Stromableitvorrichtung, welche dazu eingerichtet ist eine elektrische Ladung von einer Motorwelle zu einem Motorgehäuse abzuleiten. In Fig. 24D dieser Veröffentlichung ist eine Variante dargestellt, bei der zwischen dem leitfähigen Aufbau und der Welle eine Hülse angeordnet ist. Zur mechanischen und elektrischen Kontaktierung der Hülse mit der Welle sind mehrere O-Ringe vorgesehen. Alternativ dazu kann die Hülse auf die Welle geklebt oder aufgepresst sein. Durch die Hülse soll eine Lebensdauer der Stromableitvorrichtung erhöht werden.

Die Veröffentlichung CN 111043315 A beschreibt eine Öldichtung mit einer Erdungsfunktion. Dabei sind ein Dichtungs-Elastomer und ein leitfähiges Elastomer zwischen einem inneren Rahmen und einem äußeren Rahmen angeordnet. Der innere Rahmen ist auf eine Welle aufgepresst.

Eine auf eine Welle aufgepresste Hülse kann aufgrund von eindringender Feuchtigkeit korrosiv unterwandert werden. Wirkt diese Hülse auch als Lauffläche für eine Dichtung, so kann es zu Undichtigkeiten kommen, indem beispielsweise Öl durch einen Spalt zwischen Welle und Hülse austritt. Die Dichtung wird in diesem Fall sozusagen "kurzgeschlossen". Wird die Hülse verkürzt, sodass die Hülse ausschließlich für einen Schleifkontakt einer Wellenerdung verwendet wird, so kann die Lauffläche einer benachbarten Dichtung bei Montage der Hülse beschädigt werden.

Es ist daher Aufgabe der Erfindung eine Anordnung zur Abdichtung und Erdung einer Welle anzugeben, welche eine zuverlässige Dicht- und Erdungsfunktion gewährleistet.

Die Aufgabe wird gelöst durch die Merkmale des Patentanspruchs 1. Vorteilhafte Ausgestaltungen ergeben sich aus den abhängigen Patentansprüchen, der Beschreibung, sowie aus den Figuren.

Zur Lösung der Aufgabe wird eine Anordnung zur Abdichtung und Erdung einer aus einem Gehäuse hervorragenden Welle vorgeschlagen. Ein Radialwellendichtring mit einer Dichtlippe ist zur Abdichtung eines radialen Spalts zwischen der Welle und dem Gehäuse zu einer Umgebung hin vorgesehen. Zur Herstellung einer elektrisch leitfähigen Verbindung zwischen der Welle und dem Gehäuse ist eine Wellenerdungseinrichtung vorgesehen. Die Wellenerdungseinrichtung ist an der Umgebungsseite des Radialwellendichtrings angeordnet, sodass die Wellenerdungseinrichtung frei von beispielsweise Schmiermittel der Wellenlagerung ist. Die Wellenerdungseinrichtung weist zumindest ein Kontaktelement auf, welches einen Schleifkontakt zu einer auf der Welle aufgebrachten Hülse bildet. Die Hülse ist aus einem dünnwandigen Blech gebildet, und weist einen radial nach außen gerichteten Abschnitt auf. Ein Wirkdurchmesser der Dichtlippe ist kleiner als ein Durchmesser des Schleifkontakts des zumindest einen Wellenerdungs-Kontaktelements.

Durch den unterschiedlichen Durchmesser von Dichtlippe und Schleifkontakt wird eine Beschädigung der Dichtlippen-Lauffläche bei Montage der Hülse auf der Welle auf einfache Weise vermieden. Denn um eine erforderliche Dichtheit zu gewährleisten, ist die wellenseitige Lauffläche der Dichtlippe üblicherweise drallfrei geschliffen. Beim Aufziehen der Hülse kann diese drallfrei geschliffene Oberfläche beschädigt werden. Das Risiko einer derartigen Beschädigung wird durch die erfindungsgemäße Lösung verringert.

Vorzugsweise hat die Dichtlippe einen direkten Schleifkontakt zur Welle. In anderen Worten wird die Hülse des Wellenerdungs-Schleifkontakts nicht für den Schleifkontakt der Dichtlippe verwendet, und es kommt auch keine weitere, separate Hülse für den Schleifkontakt der Dichtlippe zum Einsatz. Sollte es zu einer korrosiven Unterwandung der Hülse kommen, kommt es bei einer derartigen Lösung nicht zu einem "Kurzschluss" der Dichtung.

Vorzugsweise ist ein Innendurchmesser der Hülse größer als der Wirkdurchmesser der Dichtlippe. In anderen Worten wird die Hülse auf einen Wellenabschnitt aufgebracht, welcher einen größeren Durchmesser aufweist als der dem Radialwellendichtring zugeordneten Wellenabschnitt.

Die Hülse ist vorzugsweise auf die Welle aufgepresst und/oder aufgeklebt. Derart kann ein zuverlässiger elektrischer und mechanischer Kontakt zwischen der Welle und der Hülse hergestellt werden.

Vorzugsweise besteht die Hülse aus Bronze oder einem rostfreien Edelstahl. Unter einem rostfreiem Edelstahl wird hierbei ein Edelstahl mit ausreichendem Chrom-Anteil bezeichnet, welcher eine natürliche Passivierung verursacht und somit eine Korrosion verhindert. Die Hülse kann als Lauffläche für das zumindest eine Kontaktelement eine Silberbeschichtung aufweisen, welche beispielsweise durch eine Galvanisierung auf die Hülse aufgebracht ist.

Die vorgeschlagene Anordnung zur Abdichtung und Erdung kann Bestandteil eines Getriebes für ein Kraftfahrzeug sein, beispielsweise ein Automatikgetriebe oder ein automatisiertes Getriebe mit mehreren Gangstufen. Die entsprechend geerdete Welle des Getriebes ist in einem Gehäuse des Getriebes drehbar gelagert, wobei ein Abschnitt der Welle aus dem Gehäuse hervorsteht. Der aus dem Gehäuse hervorstehende Wellenabschnitt kann Umwelteinflüssen wie Sand und Feuchtigkeit ausgesetzt sein. Die Welle kann beispielsweise eine Abtriebswelle des Getriebes sein. Das Getriebe kann eine elektrische Maschine aufweisen, welche zum Antrieb der Welle eingerichtet ist.

Die vorgeschlagene Anordnung zur Abdichtung und Erdung kann Bestandteil einer elektrischen Achsantriebs-Einheit für ein Kraftahrzeug sein. Die entsprechend geerdete Welle der elektrischen Achsantriebs-Einheit ist in einem Gehäuse der elektrischen Achsantriebs-Einheit drehbar gelagert, wobei ein Abschnitt der Welle aus dem Gehäuse hervorsteht. Der aus dem Gehäuse hervorstehende Wellenabschnitt kann Umwelteinflüssen wie Sand und Feuchtigkeit ausgesetzt sein.

Die vorgeschlagene Anordnung zur Abdichtung und Erdung kann Bestandteil einer elektrischen Maschine mit einem drehfesten Stator und einem drehbar gelagerten Rotor sein. Der Rotor ist mit einer Rotorwelle gekoppelt. Die Rotorwelle ist durch die vorgeschlagene Anordnung gegenüber einem Gehäuse der elektrischen Maschine geerdet. Ein Abschnitt der Rotorwelle steht aus dem Gehäuse hervor.

Ausführungsbeispiele der Erfindung sind anhand der Figuren detailliert beschrieben. Es zeigen:
Fig. 1 und Fig. 2 je einen Antriebsstrang eines Kraftfahrzeugs;
Fig. 3 eine elektrische Maschine; sowie
Fig. 4 und Fig. 5 je eine Detail-Schnittansicht einer aus einem Gehäuse hervorragenden Welle.

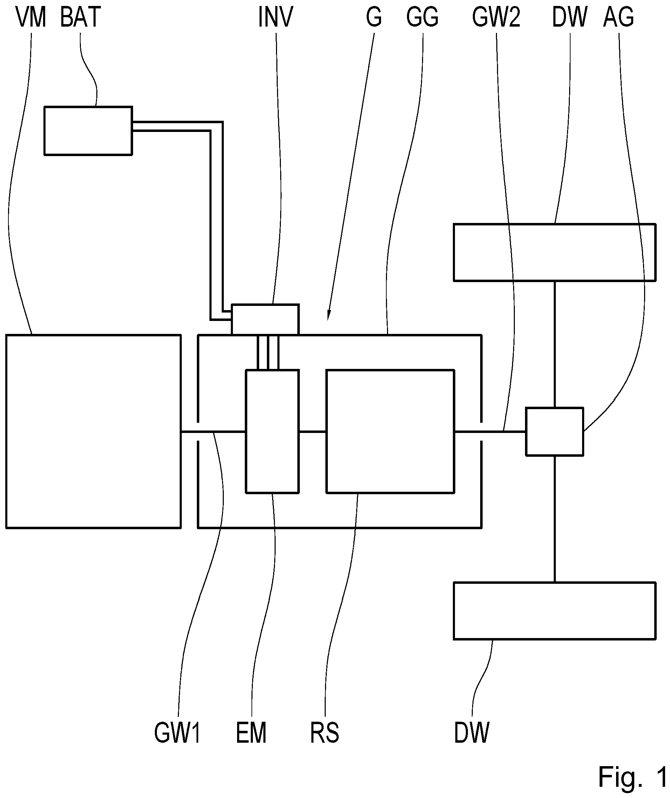

Fig. 1 zeigt schematisch einen Antriebsstrang für ein Kraftfahrzeug. Der Antriebsstrang weist einen Verbrennungsmotor VM auf, dessen Ausgang mit einer Eingangswelle GW1 eines Getriebes G verbunden ist. Eine Abtriebswelle GW2 des Getriebes G ist mit einem Differentialgetriebe AG verbunden. Das Differentialgetriebe AG ist dazu eingerichtet, die an der Abtriebswelle GW2 anliegende Leistung auf Antriebsräder DW des Kraftfahrzeugs zu verteilen. Das Getriebe G weist einen Radsatz RS auf, welcher zusammen mit in Fig. 1 nicht dargestellten Schaltelementen dazu eingerichtet ist verschiedene Übersetzungsverhältnisse zwischen der Eingangswelle GW1 und der Abtriebswelle GW2 bereitzustellen. Der Radsatz RS ist von einem Gehäuse GG umschlossen, welches auch eine mit der Eingangswelle GW1 verbundene elektrische Maschine EM beherbergt. Die elektrische Maschine EM ist dazu eingerichtet die Eingangswelle GW1 anzutreiben. Am Gehäuse GG ist ein Umrichter INV befestigt. Der Umrichter INV ist einerseits mit der elektrischen Maschine EM und andererseits mit einer Batterie BAT verbunden. Der Umrichter INV dient zur Wandlung des Gleichstroms der Batterie BAT in einen zum Betrieb der elektrischen Maschine EM geeigneten Wechselstrom, und weist dazu mehrere Leistungshalbleiter auf. Die Wandlung zwischen Gleichstrom und Wechselstrom erfolgt durch einen gesteuerten pulsartigen Betrieb der Leistungshalbleiter.

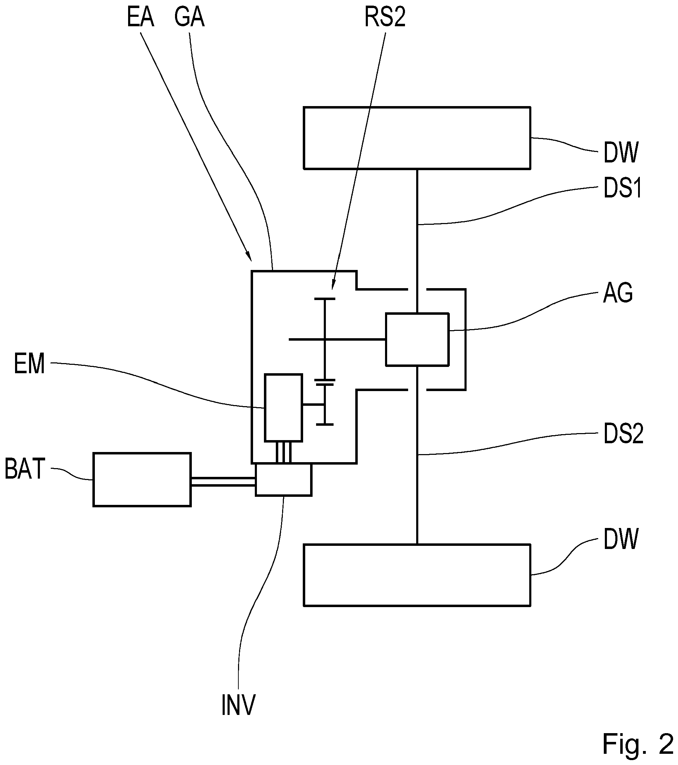

Fig. 2 zeigt schematisch einen Antriebsstrang für ein Kraftfahrzeug, welcher im Gegensatz zur in Fig. 1 dargestellten Ausführung ein rein elektrischer Antriebsstrang ist. Der Antriebsstrang weist eine elektrische Achsantriebs-Einheit EA auf. Die elektrische Achsantriebs-Einheit EA umfasst eine elektrische Maschine EM, deren Leistung über einen Reduktionsradsatz RS2 und ein Differentialgetriebe AG auf Antriebsräder DW eines Kraftfahrzeugs übertragen werden. Ausgangswellen DS1, DS2 des Differentialgetriebes AG sind mit den Antriebsrädern DW verbunden. Die elektrische Maschine EM, der Reduktionsradsatz RS2 und das Differentialgetriebe AG sind von einem Gehäuse GA umschlossen. Am Gehäuse GA ist ein Umrichter INV befestigt. Der Umrichter INV ist einerseits mit der elektrischen Maschine EM und andererseits mit einer Batterie BAT verbunden. Der Umrichter INV dient zur Wandlung des Gleichstroms der Batterie BAT in einen zum Betrieb der elektrischen Maschine EM geeigneten Wechselstrom, und weist dazu mehrere Leistungshalbleiter auf. Die Wandlung zwischen Gleichstrom und Wechselstrom erfolgt durch einen gesteuerten pulsartigen Betrieb der Leistungshalbleiter.

Die in Fig. 1 und Fig. 2 dargestellten Antriebsstränge sind nur beispielhaft anzusehen.

Durch den pulsartigen Betrieb der Leistungshalbleiter können elektromagnetische Störsignale entstehen, die beispielsweise im Antriebsstrang gemäß Fig. 1 in die Abtriebswelle GW2 oder im Antriebsstrang gemäß Fig. 2 in die Ausgangswellen DS1, DS2 eingekoppelt werden. Durch die in Fig. 1 und Fig. 2 nicht dargestellte Lagerung der Abtriebswelle GW2, bzw. der Ausgangswellen DS1, DS2 sind diese jedoch gegenüber dem Gehäuse GG, bzw. dem Gehäuse GA elektrisch isoliert, da das Schmieröl im Inneren der Gehäuse GG, GA elektrisch isolierende Eigenschaften aufweist. Somit können in die Abtriebswelle GW2, bzw. in die Ausgangswellen DS1, DS2 eingekoppelte Störsignale nicht auf kurzem Weg in das Gehäuse GG, bzw. Gehäuse GA fließen, welches mit einer elektrischen Masse des Kraftfahrzeugs verbunden ist. Stattdessen gelangen die Störsignale durch elektromagnetische Abstrahlung zurück zur elektrischen Masse, wodurch andere elektronische Komponenten des Kraftfahrzeugs gestört werden können. Die aus dem Gehäuse GG, bzw. Gehäuse GA hervortretende Abtriebswelle GW2, bzw. Ausgangswellen DS1, DS2 können dabei eine Antenne bilden, welche die elektromagnetische Abstrahlung der Störsignale begünstigt.

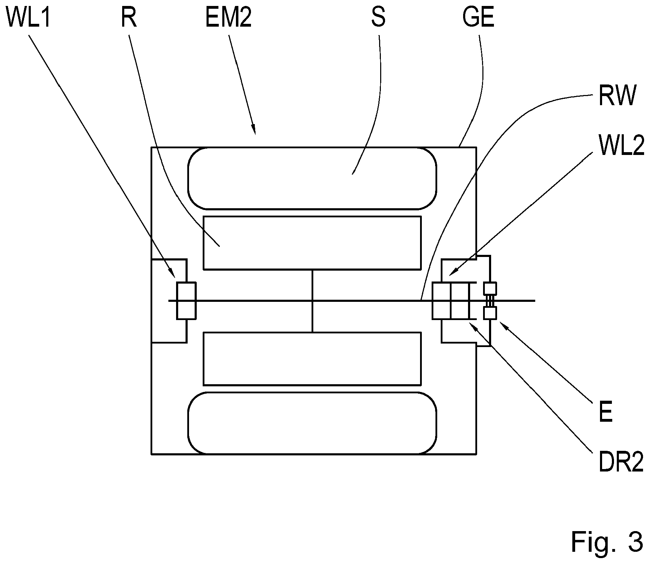

Fig. 3 zeigt eine schematische Ansicht einer elektrischen Maschine EM2. Die elektrische Maschine EM2 weist ein Gehäuse GE auf, welches einen Stator S und einen Rotor R aufnimmt. Der Stator S ist drehfest im Gehäuse GE fixiert. Der Rotor R ist mit einer Rotorwelle RW gekoppelt, wobei die Rotorwelle RW über zwei Wälzlager WL1, WL2 drehbar gelagert ist. Ein Ende der Rotorwelle RW ragt aus dem Gehäuse GE hervor. An einem freiliegenden Abschnitt der Rotorwelle RW ist eine Wellenerdungseinrichtung E vorgesehen. Zwischen dem Wälzlager WL2 und der Wellenerdungseinrichtung ist ein Dichtring DR2 vorgesehen. Die Wellenerdungseinrichtung E stellt einen elektrisch leitfähigen Kontakt zwischen dem Gehäuse GE und der Rotorwelle RWher. Die Wellenerdungseinrichtung E weist dazu Bürsten oder andere elektrisch leitfähige Kontaktelemente auf, welche auf einer Oberfläche der Rotorwelle RW schleifen. Über die Wellenerdungseinrichtung E kann ein Potentialunterschied zwischen Gehäuse GE und der Rotorwelle E abgebaut werden. Die Wälzlager WL1, WL2 werden dadurch vor einem unkontrollierten Potentialausgleich über die Wälzkörper der Wälzlager WL1, WL2 geschützt.

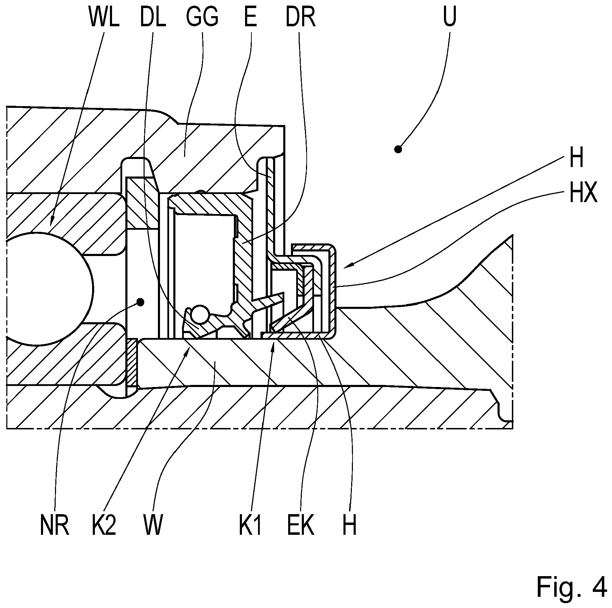

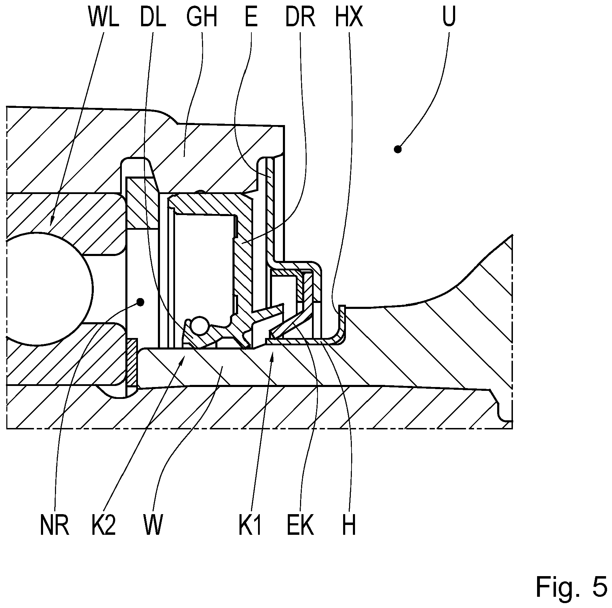

Fig. 4 zeigt eine Detail-Schnittansicht einer aus einem Gehäuse GH hervorragenden Welle W gemäß einem ersten Ausführungsbeispiel. Die in Fig. 4 dargestellte Welle W könnte beispielsweise die Abtriebswelle GW2 gemäß Fig. 1, oder eine der Ausgangswellen DS1, DS2 gemäß Fig. 2, oder die Rotorwelle RW gemäß Fig. 3 sein. Das Gehäuse GH könnte beispielsweise das Gehäuse GG gemäß Fig. 1, das Gehäuse GA gemäß Fig. 2 oder das Gehäuse GE gemäß Fig. 3 sein. Die Welle W ist mehrteilig aufgebaut, und ist über ein Kugellager WL am Gehäuse GH gelagert. Das Kugellager WL befindet sich in einem Ölraum NR. Zur Abdichtung des Ölraums NR gegenüber einer Umgebung U ist ein Radialwellendichtring DR mit einer Dichtlippe DL vorgesehen, welche einen Schleifkontakt K2 zur Welle W bildet. An der Umgebungsseite des Radialwellendichtrings DR ist eine Wellenerdungseinrichtung E vorgesehen. Die Wellenerdungseinrichtung E ist mit dem Gehäuse GH mechanisch und elektrisch leitfähig verbunden. Dazu sind in Fig. 4 nicht dargestellte Kontakt- und Befestigungsfortsätze vorgesehen, über welche die Wellenerdungseinrichtung E mechanisch und elektrisch mit dem Gehäuse GH verbunden ist. Kontaktelemente EK der Wellenerdungseinrichtung E bilden einen elektrisch leitfähigen Schleifkontakt K1 zu einer Hülse H, welche auf die Welle W aufgepresst und/oder aufgeklebt ist. Die Kontaktelemente EK können beispielsweise Bürsten oder elektrisch leitfähige PTFE-Elemente oder ein elektrisch leitfähiges Vlies sein. Die Hülse H besteht aus einem rostfreien Edelstahl oder aus Bronze, und weist einen radial nach außen gerichteten Abschnitt HX auf. Der Abschnitt HX dienst einerseits als Schnittstelle zu einem Montagewerkzeug, sodass die dünnwandige Hülse H auf die Welle W aufgepresst werden kann. Der Abschnitt HX dient andererseits zum Schutz des elektrisch leitfähigen Schleifkontakts K1 vor Einflüssen der Umgebung U, beispielsweise zum Fernhalten von Verschmutzungen wie Sand. Dazu umschließt die Hülse H einen Abschnitt der Wellenerdungseinrichtung E. Ein Wirkdurchmesser der Dichtlippe DL am Schleifkontakt K2 ist kleiner als ein Durchmesser der Kontaktelemente EK am Schleifkontakt K1.Fig. 5 zeigt eine Detail-Schnittansicht einer aus einem Gehäuse GH hervorragenden Welle W gemäß einem zweiten Ausführungsbeispiel. Die in Fig. 5 dargestellte Welle W könnte beispielsweise die Abtriebswelle GW2 gemäß Fig. 1, oder eine der Ausgangswellen DS1, DS2 gemäß Fig. 2, oder die Rotorwelle RW gemäß Fig. 3 sein. Das Gehäuse GH könnte beispielsweise das Gehäuse GG gemäß Fig. 1, das Gehäuse GA gemäß Fig. 2 oder das Gehäuse GE gemäß Fig. 3 sein. Wie im in Fig. 4 dargestellten ersten Ausführungsbeispiel ist der Wirkdurchmesser der Dichtlippe DL am Schleifkontakt K2 ist kleiner als ein Durchmesser der Kontaktelemente EK am Schleifkontakt K1. Der unterschiedliche Durchmesser ergibt sich im Ausführungsbeispiel gemäß Fig. 5 nicht nur durch das Vorhandensein der Hülse H, sondern auch durch einen unterschiedlichen Wellendurchmesser im Bereich der Schleifkontakte K1 und K2. Somit ist ein Innendurchmesser der Hülse H größer als der Wirkdurchmesser der Dichtlippe DL am Schleifkontakt K2.

Durch den abgestuften Wellendurchmesser wird die wellenseitige Lauffläche der Dichtlippe DL beim Montieren der Hülse H auf die Welle W nicht beschädigt. Somit wird eine zuverlässige Dichtfunktion des Radialwellendichtrings DR gewährleistet. Sollte die Hülse H durch Eindringen von Feuchtigkeit in einen Spalt zwischen Hülse H und Welle W korrosiv unterwandert werden, so würde durch die entsprechend kurze Hülse H der Radialwellendichtring DR nicht "kurzgeschlossen" werden.

### Bezugszeichen

- VM: Verbrennungsmotor
- EA: Elektrische Achsantriebs-Einheit
- G: Getriebe
- GW1: Eingangswelle
- GW2: Abtriebswelle
- RS: Radsatz
- RS2: Reduktionsradsatz
- EM: Elektrische Maschine
- INV: Umrichter
- BAT: Batterie
- AG: Differentialgetriebe
- DS1: Ausgangswelle
- DS2: Ausgangswelle
- DW: Antriebsrad
- GA: Gehäuse
- EM2: Elektrische Maschine
- S: Stator
- R: Rotor
- RW: Rotorwelle
- WL1: Lager
- WL2: Lager
- DR2: Dichtring
- GE: Gehäuse
- W: Welle
- H: Hülse
- HX: Abschnitt der Hülse
- GH: Gehäuse
- WL: Lager
- DR: Radialwellendichtring
- DL: Dichtlippe
- NR: Ölraum
- E: Wellenerdungseinrichtung
- EK: Kontaktelement
- K1: Schleifkontakt
- K2: Schleifkontakt
- U: Umgebung

## Patentansprüche

1. Anordnung zur Abdichtung und Erdung einer aus einem Gehäuse (GH) hervorragenden Welle (W),
- wobei ein Radialwellendichtring (DR) mit einer Dichtlippe (DL) zur Abdichtung eines radialen Spalts zwischen der Welle (W) und dem Gehäuse (GH) zu einer Umgebung (U) vorgesehen ist,
- wobei zur Herstellung einer elektrisch leitfähigen Verbindung zwischen der Welle (W) und dem Gehäuse (GH) eine Wellenerdungseinrichtung (E) vorgesehen ist,
- wobei die Wellenerdungseinrichtung (E) umgebungsseitig neben dem Radialwellendichtring (DR) angeordnet ist,
- wobei die Wellenerdungseinrichtung (E) zumindest ein Kontaktelement (EK) aufweist, welches einen Schleifkontakt (K1) zu einer auf der Welle (W) aufgebrachten Hülse (H) bildet,
- wobei die Hülse (H) aus einem dünnwandigen Blech gebildet ist und einen radial nach außen gerichteten Abschnitt (HX) aufweist, und
- wobei ein Wirkdurchmesser der Dichtlippe (DL) kleiner ist als ein Durchmesser des Schleifkontakts (K1) des zumindest einen Kontaktelements (EK).

2. Anordnung nach Anspruch 1, **dadurch gekennzeichnet, dass** die Dichtlippe (DL) einen direkten Schleifkontakt (K2) zur Welle (W) hat.

3. Anordnung nach Anspruch 1 oder Anspruch 2, **dadurch gekennzeichnet, dass** ein Innendurchmesser der Hülse (H) größer ist als der Wirkdurchmesser der Dichtlippe (DL).

4. Anordnung nach einem der Ansprüche 1 bis 3, **dadurch gekennzeichnet, dass** die Welle (W) unterschiedlich große Durchmesser aufweist, wobei ein Durchmesser der Welle (W) im Kontaktbereich des Radialwellendichtrings (DR) zum Durchmesser im Kontaktbereich der Hülse (H) verschieden ist.

5. Anordnung nach einem der Ansprüche 1 bis 4, **dadurch gekennzeichnet, dass** die Hülse (H) auf die Welle (W) aufgepresst und/oder aufgeklebt ist.

6. Anordnung nach einem der Ansprüche 1 bis 5, **dadurch gekennzeichnet, dass** die Hülse (H) aus einem rostfreien Edelstahl oder aus Bronze besteht.

7. Anordnung nach Anspruch 6, **dadurch gekennzeichnet, dass** die Hülse (H) als Lauffläche für das zumindest eine Kontaktelement (EK) der Wellenerdungseinrichtung (E) eine Silberbeschichtung aufweist.

8. Getriebe (G) für ein Kraftfahrzeug, **gekennzeichnet durch** eine Anordnung zur Abdichtung und Erdung einer aus einem Gehäuse (GG) des Getriebes (G) hervorragenden Welle (GW2) nach einem der Ansprüche 1 bis 7.

9. Getriebe (G) nach Anspruch 8, **dadurch gekennzeichnet, dass** die Welle (GW2) eine Abtriebswelle des Getriebes (G) bildet.

10. Getriebe (G) nach Anspruch 8 oder Anspruch 9, **dadurch gekennzeichnet, dass** das Getriebe (G) eine elektrische Maschine (EM) aufweist, welche zum Antrieb der Welle (GW2) eingerichtet ist.

11. Elektrische Achsantriebs-Einheit (EA) für ein Kraftfahrzeug, **gekennzeichnet durch** eine Anordnung zur Abdichtung und Erdung einer aus einem Gehäuse (GA) der Achsantriebs-Einheit (EA) hervorragenden Welle (DS1, DS2) nach einem der Ansprüche 1 bis 7.

12. Elektrische Maschine (EM2) mit einem drehfesten Stator (S) und einem drehbaren Rotor (R), wobei der Rotor (R) mit einer Rotorwelle (RW) gekoppelt ist, wobei ein Ende der Rotorwelle (RW) aus einem Gehäuse (GE) der elektrischen Maschine (EM2) hervorragt, **gekennzeichnet durch** eine Anordnung zur Abdichtung und Erdung der Rotorwelle (RW) nach einem der Ansprüche 1 bis 7.
